# EUROPÄISCHE PATENTSCHRIFT

(11) **EP 0 633 863 B1**
(45) Veröffentlichungstag und Bekanntmachung des Hinweises auf die Patenterteilung: **06.12.1995**
(21) Anmeldenummer: 93921731.1
(22) Anmeldetag: 04.02.1993
(51) Int. Cl.: B65G 53/30, B65G 53/52, F17D 1/16

(54) **VORRICHTUNG ZUR FÖRDERUNG VON FESTSTOFFREICHEN DICKSTOFFEN**
DEVICE FOR CONVEYING THICK SUBSTANCES CONTAINING A GREAT DEAL OF SOLID MATERIAL
DISPOSITIF POUR LE TRANSPORT DE MATIERES CONSISTANTES A FORTE TENEUR EN MATIERES SOLIDES

(30) Priorität: 03.04.1992 DE 4211138
(43) Veröffentlichungstag der Anmeldung: 18.01.1995
(73) Patentinhaber: Putzmeister-Werk Maschinenfabrik GmbH, 72629 Aichtal (DE)
(72) Erfinder: SCHLECHT, Karl, D-7024 Filderstadt 4 (DE); SCHUSTER, Ulrich, D-7000 Stuttgart 1 (DE); ROCKSTROH, Axel, D-7432 Bad Urach (DE)
(74) Vertreter: Wolf, Eckhard, Dr.-Ing.
(86) Internationale Anmeldenummer: EP9300251
(87) Internationale Veröffentlichungsnummer: WO9320002

(56) Entgegenhaltungen:
- DE-B- 1 001 186
- GB-A- 556 707
- US-A- 3 892 252

## Beschreibung

Die Erfindung betrifft eine Vorrichtung zur Förderung von feststoffreichen Dickstoffen mit einem unter Druck mit den Dickstoffen beaufschlagbaren Förderrohr und mindestens einer in das Förderrohr mündenden Injektionsstelle zum Einbringen eines Gleitmittels in den Bereich zwischen Rohrleitungswand und Oberfläche eines sich in der Rohrleitung ausbildenden Dickstoffstrangs.

Vorrichtungen dieser Art werden zur Förderung von Feststoff-Flüssig-Gemischen mit hohem Feststoffanteil wie z.B. Klärschlamm oder Lehm, eingesetzt. Derartige Dickstoffe weisen eine große innere Reibung auf, so daß sich beim Hindurchpressen durch ein Förderrohr quer zur Ausbreitungsrichtung kein Geschwindigkeitsgefälle ausbildet. Eine Relativbewegung findet im wesentlichen nur zwischen der Oberfläche des Dickstoffstrangs und der Förderleitungswand statt, wobei die Gleitreibung durch das injizierte Gleitmittel reduziert wird. Bei der Förderung teilentwässerter Klärschlämme ist es bereits bekannt (DE-OS 36 05 723), zur Verminderung der Wandreibung am Beginn der Förderleitung Heizöl, Wasser oder eine wässrige Lösung eines hochpolymeren Gleitmittels zwischen den Klärschlamm und die Wand der Förderleitung einzubringen. Dies erfolgt meist kontinuierlich und proportional zum Förderstrom in dosierter Menge mit dem Erfolg, daß sich zwischen der Rohrinnenwand und dem Dickstoffstrang eine Grenzschicht bildet, durch die sich der Förderdruck um 80 % und mehr reduzieren läßt.

Vor allem bei längeren Förderstrecken von mehreren 100 Metern ergeben sich jedoch auch dort noch sehr hohe Förderdrücke, da die Gleitschicht entlang der Förderstrecke allmählich verschwindet.

Ausgehend hiervon liegt der Erfindung die Aufgabe zugrunde, die bekannte Fördervorrichtung der eingangs angegebenen Art dahingehend zu verbessern, daß entlang der Förderstrecke eine gleichmäßige Gleitmittelschicht bei geringstmöglichem Gleitmittelverbrauch aufrechterhalten wird.

Zur Lösung dieser Aufgabe werden die im Patentanspruch 1 angegebenen Merkmale vorgeschlagen. Weitere vorteilhafte Ausgestaltungen und Weiterbildungen der Erfindung ergeben sich aus den abhängigen Ansprüchen.

Der Erfindung liegt die Erkenntnis zugrunde, daß ein geringer Druckabfall in der Förderleitung nur dann erreichbar ist, wenn der Dickstoffstrang weitgehend wandberührungsfrei durch das gesamte Förderrohr transportiert wird. Dies ist dann der Fall, wenn über die gesamte Förderstrecke eine ausreichend dicke Gleitmittelschicht aufrechterhalten werden kann. Um dies zu erreichen, wird gemäß der Erfindung vorgeschlagen, daß das Förderrohr mindestens eine stromabwärts im Abstand von der Injektionsstelle angeordnete ringförmige Querschnittseinschnürung aufweist. Diese Querschnittseinschnürung hat die Funktion eines Grenzschichtzauns, der dafür sorgt, daß das Gleitmittel nicht unnötig durch den Dickstoffstrang verschleppt wird. Außerdem kommt es an der Querschnittseinschnürung zu einem Abkämmvorgang und zu einer Begrenzung des Dickstoffstrangs auf einen entsprechend kleinen Durchmesser. Weiter wird dadurch eine Zentrierung des Dickstoffstrangs innerhalb des Förderrohrs erzielt, die dazu führt, daß die Gleitmittelschicht über den Umfang weitgehend gleich dick bleibt. Vorteilhafterweise ist der Innendurchmesser des Förderrohrs im Bereich der Querschnittseinschnürung mindestens um 1 mm vorzugsweise um 2 bis 3 mm kleiner als außerhalb dieses Bereichs.

Eine bevorzugte Ausgestaltung der Erfindung sieht vor, daß die Querschnittseinschnürung durch eine an der Innenseite des Förderrohrs angeordnete wulst- oder bundartige ringförmige Erhebung gebildet ist, die beispielsweise durch eine in das Rohrinnere überstehende ringförmige Schweißraupe oder durch Ein-oder Ausdrehen des Rohrs erzeugt werden kann. Wahlweise ist es auch möglich, die meist aufgeschweißten Flanschringe der Rohrleitung mit im Vergleich zum Rohrinnendurchmesser verkleinertem Durchmesser auszustatten. Dies kann an einer oder an beiden Flanschhälften der Fall sein. Weiter kann die Querschnittseinschnürung durch einen in das Rohrinnere überstehenden, vorzugsweise zwischen zwei Rohrflanschen eingeklemmten Bundring gebildet werden.

Bei horizontalen oder schrägen Förderrohren kommt es aufgrund des meist höheren spezifischen Gewichts des Förderguts im Vergleich zum Gleitmittels zu einer Verschiebung des Dickstoffstrangs in Richtung Wandunterseite und dadurch zu Störungen im Reibverhalten. Es ist daher zweckmäßig, entlang dem Förderrohr mehrere im Abstand vorzugsweise von 2 bis 6 m voneinander angeordnete Querschnittseinschnürungen vorzusehen, die auch über längere Förderstrecken eine ausreichende Zentrierung gewährleisten. Aus dem gleichen Grund ist es von Vorteil, wenn am stromabseitigen Ende eines Rohrbogens, innerhalb welchem der Dickstoffstrang in Richtung Außenradius gedrückt wird, eine den Dickstoffstrang wieder zentrierende Querschnittseinschnürung vorzusehen. Um darüber hinaus Verschleppungsverluste zu kompensieren, hat es sich als besonders vorteilhaft erwiesen, wenn im Strömungsschatten der Querschnittseinschnürung eine die Rohrwand im wesentlichen radial durchdringende, vorzugsweise verschließbare Bohrung für den Anschluß einer Injektionsleitung für Gleitmittel angeordnet ist, wobei stromabwärts im Abstand von der Bohrung mindestens eine weitere Querschnittseinschnürung vorgesehen werden kann. Bei horizontal oder schräg verlegten Förderrohren wird die Bohrung vorteilhafterweise im Bereich der Rohrunterseite angeordnet.

Im Fall eines abrasiven Förderguts wird die ringförmige Erhebung zweckmäßig aus verschleißfestem Material hergestellt, beispielsweise durch Auftragschweißen oder die Verwendung eines gehärteten Bundrings. Letzterer ist im Verschleißfall austauschbar.

Um eine Rückgewinnung des Gleitmittels am Rohrende zu ermöglichen, ist es von Vorteil, wenn in der Nähe des Förderrohrendes mindestens zwei Querschnittseinschnürungen im Abstand voneinander angeordnet sind und wenn im Abstandsbereich mindestens eine die Rohrwand durchdringende Drainage- oder Absaugbohrung für das Gleitmittel angeordnet ist. Das rückgewonnene Gleitmittel kann einer kostensparenden Wiederverwendung zugeführt werden.

Im folgenden wird die Erfindung anhand der in der Zeichnung in schematischer Weise dargestellten Ausführungsbeispiele näher erläutert. Es zeigen:
- Fig. 1: eine Dickstoff-Förderanlage in schematischer Darstellung;
- Fig. 2: einen ausschnittsweisen Längsschnitt durch ein Förderrohr mit überstehender Innenschweißraupe;
- Fig. 3: einen ausschnittsweisen Längsschnitt durch ein Förderrohr mit Bundring;
- Fig. 4: einen ausschnittsweisen Längsschnitt durch ein Förderrohr mit nach innen überstehendem Flanschring;
- Fig. 5: einen ausschnittsweisen Längsschnitt durch ein Förderrohr mit überstehendem Flanschring und Injektionsbohrung.

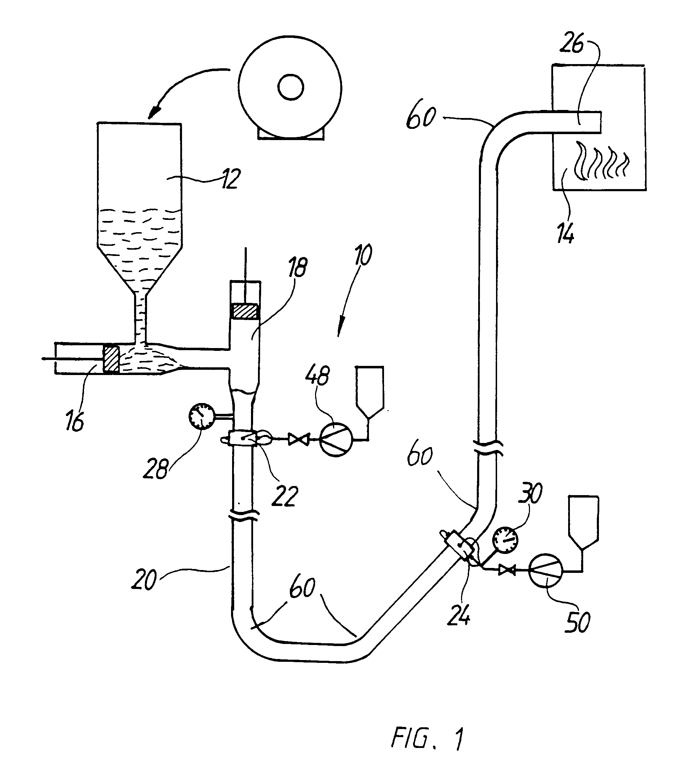

Die in Fig. 1 schematisch dargestellte Förderanlage 10 ist zur Förderung von feststoffreichen Dichtstoffen, wie z.B. von teilentwässertem Klärschlamm bestimmt, der nach Zwischenlagerung in einem Schlammstapel 12 über eine Rohrleitung 20 zur Verbrennung in einen Wirbelschichtofen 14 gefördert wird. Die Förderanlage 10 besteht im wesentlichen aus einer mit dem teilentwässerten Klärschlamm beaufschlagbaren Verdichterpumpe 16, einer über die Verdichterpumpe 16 mit dem vorverdichtetem Klärschlamm beschickbaren Förderpumpe 18, einer zum Wirbelschichtofen 14 führenden Rohrleitung 20 sowie zwei in der Rohrleitung 20 angeordneten Injektionsdüsen 22 und 24. Die Injektionsdüsen 22, 24 sind über Dosierpumpen 48 bzw. 50 mit einem Gleitmittel beaufschlagbar. Die Drucküberwachung des Systems erfolgt über Manometer 28 bzw. 30, die in der Nähe der Injektionsstellen 22, 24 angeordnet sind. Die Rohrleitung 20 weist mehrere 90°- bzw. 45 °-Rohrbögen 60 auf und mündet an ihrem Austrittsende über eine Lanze 26 in den Wirbelschichtofen 14.

Das Förderrohr 20 ist aus mehreren Rohrabschnitten 20', 20'' mit dem Innendurchmesser D₁ zusammengesetzt, die an Rohrflanschen 62 miteinander verbunden sind. Die Rohrflansche 62 sind als Flanschringe ausgebildet, die an Schweißnähten 64 mit den zugehörigen Rohrabschnitten 20', 20'' verbunden sind. Die Flanschringe 62 greifen mit ihren einander zugewandten Stirnflächen paarweise formschlüssig ineinander und werden mittels eines Klemmrings 66 axial gegeneinander gepreßt.

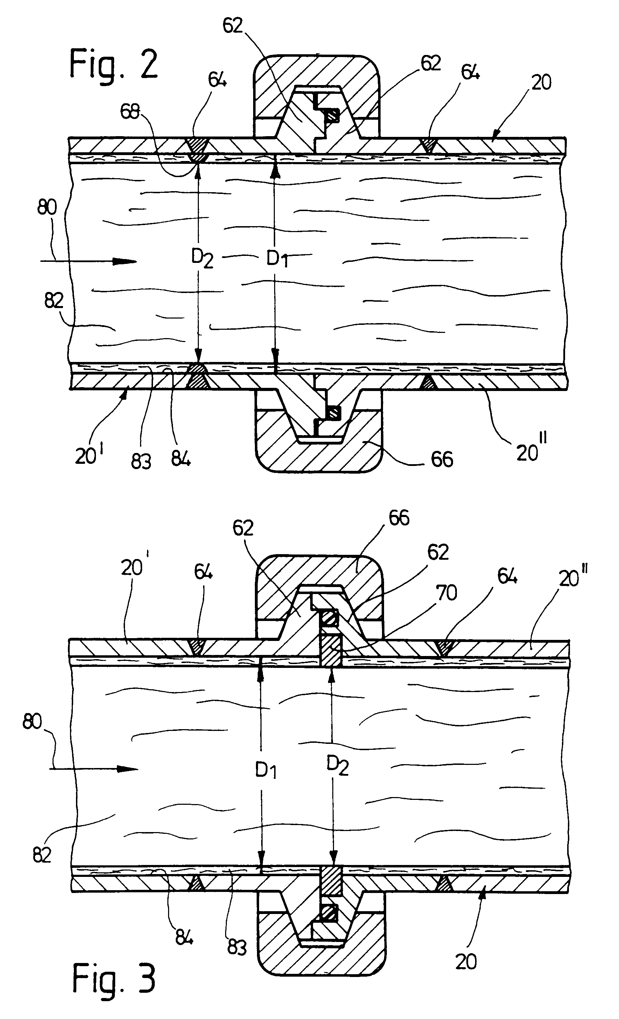

Bei dem in Fig. 2 gezeigten Ausführungsbeispiel steht die ringförmige Schweißnaht 64 mit einer innenseitigen Schweißraupe 68 um etwa 1 bis 2 mm nach dem Rohrinneren über und bildet auf diese Weise eine Querschnittseinschnürung mit dem Innendurchmesser D₂.

Bei dem Ausführungsbeispiel nach Fig. 3 ist zwischen den beiden Flanschringen 62 ein Bundring 70 eingeklemmt, der einen um 1 bis 2 mm kleineren Innendurchmesser D₂ als die benachbarten Rohrabschnitte 20',20'' aufweist und auf diese Weise die erwünschte Querschnittseinschnürung bildet.

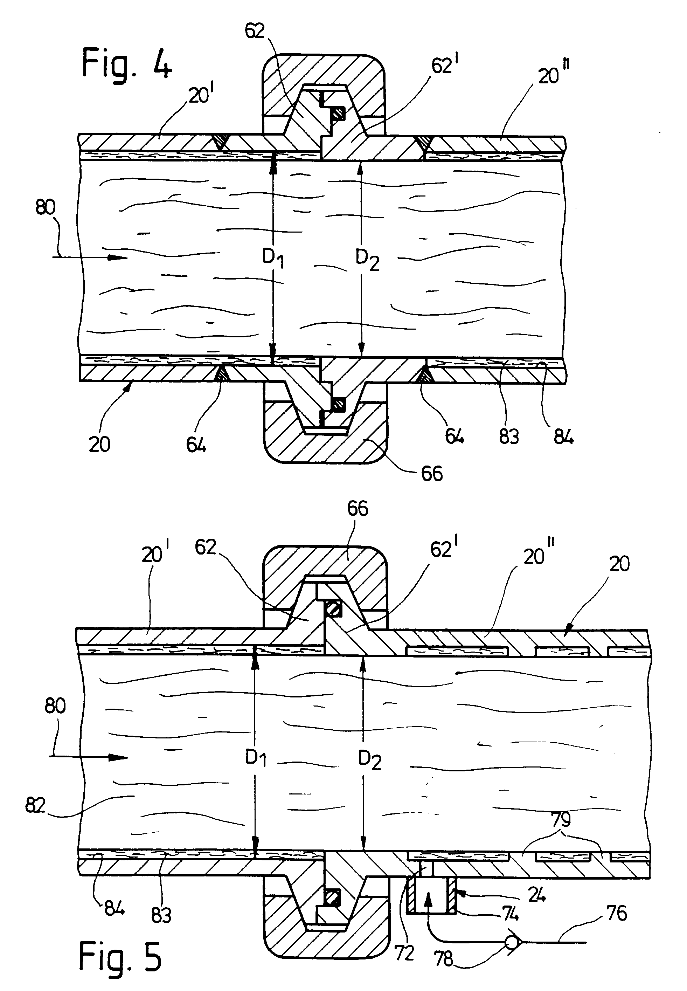

Bei den Ausführungsbeispielen nach Fig. 4 und 5 weist einer der beiden Flanschringe 62 einen kleineren Innendurchmesser D₂ als die benachbarten Rohrabschnitte 20', 20'' auf und bildet auf diese Weise die Querschnittseinschnürung. Bei dem in Fig. 5 gezeigten Ausführungsbeispiels ist im Strömungsschatten des die Querschnittseinschnürung bildenden Flanschrings 62' eine durch die Rohrwand quer hindurchgreifende Injektionsbohrung 72 angeordnet, an die über einen Stutzen 74 eine Gleitmittel-Injektionsleitung 76 mit Rückschlagventil 78 anschließbar ist. Bei horizontaler oder schräger Ausrichtung des Förderrohrs 20 sollte dabei die Injektionsbohrung 72 auf der Unterseite des Förderrohrs angeordnet sein. Zweckmäßig wird auch nach jedem Rohrbogen 60 ein Rohrabschnitt mit Injektionsbohrung 72 montiert. Im weiteren Verlauf der Rohrleitung 20 befinden sich noch weitere Querschnittseinschnürungen in Form von ringförmigen Erhebungen 79, die einen Abstand von etwa 2 bis 3 m voneinander aufweisen und die in der vorbeschriebenen Weise durch nach innen überstehende Schweißraupen oder -ringe gebildet sind.

Durch das Förderrohr 20 wird in Richtung des Pfeils 80 (Fig. 2 bis 5) ein zusammenhängender Dickstoffstrang 82 hindurchgefördert, der im Bereich der Querschnittseinschnürungen 68, 70, 62', 79 in seinem Umfang durch Abkämmen so begrenzt und innerhalb des Förderrohrs 20 zentriert wird, daß zwischen seiner Oberfläche und der Innenseite der Rohrwand ein mit Gleitmittel 83 gefüllter Ringspalt 84 verbleibt. Das Gleitmittel wird an den Injektionsstellen 22, 24 in das Förderrohr injiziert. Die Querschnittseinschnürungen 68, 70, 62', 79 haben zusätzlich die Funktion von Grenzschichtzäunen, die dafür sorgen, daß in den Ringspalten 84 immer genügend Gleitmittel 83 vorhanden ist, das nur in geringem Maße von dem bewegten Dickstoffstrang 82 mitgeschleppt wird.

Zusammenfassend ist folgendes festzustellen: Die Erfindung bezieht sich auf eine Förderanlage für feststoffreiche Dickstoffe mit einem mit den Dickstoffen unter Druck beaufschlagbaren Förderrohr 20 und mindestens einer in das Förderrohr 20 mündenden Injektionsstelle 22,24 zum Einbringen eines Gleitmittels 83 in den Bereich 84 zwischen Rohrwand und Oberfläche eines sich im Förderrohr 20 ausbildenden Dickstoffstrangs 82. Um den Dickstoffstrang 82 innerhalb des Förderrohrs 20 in seiner Bewegungsrichtung zu zentrieren und eine stabile Gleitmittelschicht 83 zu erzeugen, wird gemäß der Erfindung vorgeschlagen, daß das Förderrohr 20 mindestens eine stromabwärts im Abstand von der Injektionsstelle 22,24 angeordnete ringförmige Querschnittseinschnürung aufweist, die durch eine an der Innenseite des Förderrohrs 20 angeordnete wulst- oder bundartige Erhebung 62' gebildet ist. Im Strömungsschatten der Querschnittseinschnürung 62' kann eine die Rohrwand radial durchdringende Bohrung 72 für den Anschluß einer Injektionsleitung 76 für Gleitmittel vorgesehen werden, wobei stromabwärts im Abstand von der Injektionsbohrung 72 mindestens eine weitere Querschnittseinschnürung 79 angeordnet ist.

## Patentansprüche

1. Vorrichtung zur Förderung von feststoffreichen Dickstoffen mit einem unter Druck mit den Dickstoffen beaufschlagbaren Förderrohr (20) und mindestens einer in das Förderrohr mündenden Injektionsstelle (22,24) zum Einbringen eines Gleitmittels in den Bereich (84) zwischen Rohrwand und Oberfläche eines sich im Förderrohr (20) ausbildenden und entlang diesem transportierten Dickstoffstrangs (82), **dadurch gekennzeichnet,** daß das Förderrohr (20) mindestens eine stromabwärts im Abstand von der Injektionsstelle (22,24) angeordnete ringförmige Querschnittseinschnürung (68,70,62',79) aufweist.

2. Vorrichtung nach Anspruch 1, **dadurch gekennzeichnet,** daß der Innendurchmesser (D₂) des Förderrohrs (20) im Bereich der Querschnittseinschnürung (68, 70,62',79) mindestens um 1 mm, vorzugsweise um 2 bis 3 mm, kleiner als außerhalb (D₁) dieses Bereiches ist.

3. Vorrichtung nach Anspruch 1 oder 2, **dadurch gekennzeichnet,** daß die Querschnittseinschnürung durch eine auf der Innenseite des Förderrohrs (20) angeordnete, wulst- oder bundartige ringförmige Erhebung (68,70,62',79) gebildet ist.

4. Vorrichtung nach einem der Ansprüche 1 bis 3, **dadurch gekennzeichnet,** daß die Querschnittseinschnürung durch eine in das Rohrinnere überstehende ringförmige Schweißraupe (68) gebildet ist.

5. Vorrichtung nach einem der Ansprüche 1 bis 3, **dadurch gekennzeichnet,** daß die Querschnittseinschnürung durch einen in das Rohrinnere überstehenden, vorzugsweise zwischen zwei Rohrverbindungsflanschen (62) eingeklemmten Bundring (70) gebildet ist.

6. Vorrichtung nach einem der Ansprüche 1 bis 3, **dadurch gekennzeichent,** daß die Querschnittseinschnürung durch einen in das Rohrinnere überstehenden, vorzugsweise an einem Rohrabschnitt (20'') angeschweißten Flanschring (62') gebildet ist.

7. Vorrichtung nach einem der Ansprüche 1 bis 6, **dadurch gekennzeichnet,** daß die Querschnittseinschnürung am stromabseitigen Ende eines Rohrbogens (60) angeordnet ist.

8. Vorrichtung nach einem der Ansprüche 1 bis 7, **dadurch gekennzeichnet,** daß im Strömungsschatten der Querschnittseinschnürung eine die Rohrwand im wesentlichen radial durchdringene, vorzugsweise verschließbare Bohrung (72) für den Anschluß einer Injektionsleitung (76) für Gleitmittel angeordnet ist.

9. Vorrichtung nach Anspruch 8, **dadurch gekennzeichnet,** daß stromabwärts im Abstand von der Bohrung (72) mindestens eine weitere Querschnittseinschnürung (79) angeordnet ist.

10. Vorrichtung nach Anspruch 8 oder 9, **dadurch gekennzeichnet,** daß bei horizontal oder schräg verlegtem Förderrohr (20) die Bohrung (72) im Bereich der Rohrunterseite angeordnet ist.

11. Vorrichtung nach einem der Ansprüche 8 bis 10, **dadurch gekennzeichnet,** daß in der Injektionsleitung (76) ein Rückschlagventil (78) angeordnet ist.

12. Vorrichtung nach einem der Ansprüche 1 bis 11, **dadurch gekennzeichnet,** daß entlang dem Förderrohr (20) mehrere im Abstand vorzugsweise von 2 bis 6 m voneinander angeordnete Querschnittseinschnürungen (68, 70, 62', 79) angeordnet sind.

13. Vorrichtung nach einem der Ansprüche 1 bis 12, **dadurch gekennzeichnet,** daß in der Nähe des Förderrohrendes (26) mindestens zwei Querschnittseinschnürungen im Abstand voneinander angeordnet sind, und daß im Bereich zwischen diesen Querschnittseinschnürungen mindestens eine die Rohrwand durchdringende Drainage- oder Absaugbohrung angeordnet ist.

14. Vorrichtung nach einem der Ansprüche 3 bis 13, **dadurch gekennzeichnet,** daß die die Querschnittseinschnürung bildende Erhebung mit mindestens einem in Strömungsrichtung durchgehenden Durchbruch versehen ist.

15. Vorrichtung nach einem der Ansprüche 3 bis 14, **dadurch gekennzeichnet,** daß die ringförmige Erhebung aus verschleißfestem Material besteht und vorzugsweise austauschbar ist.

## Claims

1. Device for conveying thick substances containing a great deal of solid material, with a conveying pipe (20) capable of being pressurized by the thick substances and at least one injection location (22, 24), discharging into the conveying pipe, for introducing a lubricant into the region (84) between the pipe wall and the surface of a length of thick substance (82) forming in the conveying pipe (20) and transported along it, characterized in that the conveying pipe (20) has at least one annular cross-sectional constriction (68, 70, 62', 79) disposed at a distance downstream from the injection location (22, 24).

2. Device according to Claim 1, characterized in that the inside diameter (D₂) of the conveying pipe (20) in the region of the cross-sectional constriction (68, 70, 62', 79) is at least 1 mm, and preferably 2 to 3 mm, smaller than that outside (D₁) this region.

3. Device according to either of Claims 1 or 2, characterized in that the cross-sectional constriction is formed by a bead-type or collar-type annular elevation (68, 70, 62', 79) located on the inside of the conveying pipe (20).

4. Device according to any one of Claims 1 to 3, characterized in that the cross-sectional constriction is formed by an annular weld bead (68) projecting into the interior of the pipe.

5. Device according to any one of Claims 1 to 3, characterized in that the cross-sectional constriction is formed by a collar ring (70), preferably clamped between two pipe connecting flanges (62), projecting into the interior of the pipe.

6. Device according to any one of Claims 1 to 3, characterized in that the cross-sectional constriction is formed by a flange ring (62'), preferably welded on to a pipe section (20''), projecting into the interior of the pipe.

7. Device according to any one of Claims 1 to 6, characterized in that the cross-sectional constriction is located at the downstream end of a pipe bend (60).

8. Device according to any one of Claims 1 to 7, characterized in that a preferably closable hole (72) for the connection of an injection pipeline (76) for lubricant is located within the flow shadow of the cross-sectional constriction, passing essentially radially through the wall of the pipe.

9. Device according to Claim 8, characterized in that at least one further cross-sectional constriction (79) is located at a distance downstream from the hole (72).

10. Device according to either of Claims 8 or 9, characterized in that in a horizontal or inclined conveying pipe (20) the hole (72) is located in the region of the underside of the pipe.

11. Device according to any one of Claims 8 to 10, characterized in that there is a non-return valve (78) in the injection pipeline (76).

12. Device according to any one of Claims 1 to 11, characterized in that there are several cross-sectional constrictions (68, 70, 62', 79) at intervals along the conveying pipe (20), preferably 2 to 6 m from each other.

13. Device according to any one of Claims 1 to 12, characterized that at least two cross-sectional constrictions are disposed at a distance from each other close to the end (26) of the conveying pipe and that at least one drainage or extraction hole, passing through the wall of the pipe, is located within the region between these cross-sectional constrictions.

14. Device according to any one of Claims 3 to 13, characterized in that the elevation forming the cross-sectional constriction has at least one hole passing through it in the direction of flow.

15. Device according to any one of Claims 3 to 14, characterized in that the annular elevation is composed of wear-resistant material and is preferably replaceable.

## Revendications

1. Dispositif pour le transport de matières consistantes à forte teneur en matières solides, comprenant un tuyau de transport (20) pouvant être rempli, sous pression, avec les matières consistantes, et au moins un point d'injection (22, 24) débouchant dans le tuyau de transport, pour l'apport d'un lubrifiant dans la zone (84) entre la paroi du tuyau et la surface d'un boudin de matières consistantes (82), qui se forme à l'intérieur du tuyau de transport (20) et est acheminé le long de celui-ci, caractérisé en ce que le tuyau de transport (20) présente, ménagé à une certaine distance en aval du point d'injection (22, 24), au moins un étranglement de section (68, 70, 62', 79) de forme annulaire.

2. Dispositif selon la revendication 1, caractérisé en ce que le diamètre interne (D₂) du tuyau de transport (20), dans la zone de l'étranglement de section (68, 70, 62', 79), est plus petit d'au moins 1 mm, de préférence de 2 à 3 mm, qu'en dehors (D₁) de cette zone.

3. Dispositif selon la revendication 1 ou 2, caractérisé en ce que l'étranglement de section est formé par un soulèvement de forme annulaire (68, 70, 62', 79), du type bourrelet ou bride, ménagé sur la face interne du tuyau de transport (20).

4. Dispositif selon l'une quelconque des revendications 1 à 3, caractérisé en ce que l'étranglement de section est formé par une chenille de soudure annulaire (68) faisant saillie à l'intérieur du tuyau.

5. Dispositif selon l'une quelconque des revendications 1 à 3, caractérisé en ce que l'étranglement de section est formé par une bride (70) faisant saillie à l'intérieur du tuyau, de préférence serrée entre deux colliers (62) de raccord de tuyau.

6. Dispositif selon l'une quelconque des revendications 1 à 3, caractérisé en ce que l'étranglement de section est formé par un collier (62') faisant saillie à l'intérieur du tuyau, de préférence soudé sur une partie de tuyau (20'').

7. Dispositif selon l'une quelconque des revendications 1 à 6, caractérisé en ce que l'étranglement de section est placé à l'extrémité en aval d'un coude (60) du tuyau.

8. Dispositif selon l'une quelconque des revendications 1 à 7, caractérisé en ce que, dans la partie protégée de l'écoulement par l'étranglement de section, traversant la paroi du tuyau de manière essentiellement radiale, est ménagé un orifice (72), de préférence condamnable, permettant le raccordement d'une conduite d'injection (76) pour lubrifiant.

9. Dispositif selon la revendication 8, caractérisé en ce qu'à une certaine distance en aval de l'orifice (72), est placé au moins un autre étranglement de section (79).

10. Dispositif selon la revendication 8 ou 9, caractérisé en ce que, pour un tuyau de transport (20) disposé à l'horizontale ou à l'oblique, l'orifice (72) est ménagé dans la zone de la face inférieure du tuyau.

11. Dispositif selon l'une quelconque des revendications 8 à 10, caractérisé en ce qu'une soupape anti-retour (78) est placée dans la conduite d'injection (76).

12. Dispositif selon l'une quelconque des revendications 1 à 11, caractérisé en ce que, le long du tuyau de transport (20), plusieurs étranglements de section (68, 70, 62', 79) sont ménagés, séparés les uns des autres par une distance de préférence située entre 2 et 6 m.

13. Dispositif selon l'une quelconque des revendications 1 à 12, caractérisé en ce qu'à proximité de l'extrémité du tuyau (26), au moins deux étranglements de section sont placés à une certaine distance l'un de l'autre, et que dans la zone entre ces étranglements de section, est ménagé au moins un orifice de drainage ou de vidange traversant la paroi du tuyau.

14. Dispositif selon l'une quelconque des revendications 3 à 13, caractérisé en ce que le soulèvement formant l'étranglement de section présente au moins une ouverture le traversant de part en part dans le sens de l'écoulement.

15. Dispositif selon l'une quelconque des revendications 3 à 14, caractérisé en ce que le soulèvement de forme annulaire est fabriqué dans un matériau résistant à l'usure, et est, de préférence, interchangeable.
